# EUROPEAN PATENT APPLICATION

(11) **EP 3 346 414 A1**
(43) Date of publication of application: **11.07.2018**
(21) Application number: 17305025.3
(22) Date of filing: 10.01.2017
(51) Int. Cl.: G06F 21/62, H04L 9/08

(54) **DATA FILING METHOD AND SYSTEM**

(71) Applicant: BMI System, 92120 Montrouge (FR)
(72) Inventor: GEYSERMANS, Francis, 92120 Montrouge (FR); CLERC, Laurent, 92120 Montrouge (FR)
(74) Representative: den Braber, Gerard Paul

(57) **Abstract**

In a method of data filing, a data filing system receives a data element to be included in a data file. The data filing system randomly assigns an encryption key (703) to the data element so as to avoid that the encryption key (703) is assigned to another data element in the data filing system. The data filing system defines an expiry date (702) for the data element and internally stores the encryption key (703) in association with the expiry date (702) that has been defined. The data filing system encrypts the data element on the basis of the encryption key (703) so as to obtain an encrypted data element. The data filing system includes the encrypted data element in the data file. The data filing system deletes (705) the encryption key (703) when the expiry date (702) associated with the encryption key is reached. This technique allows respecting a right to be forgotten while ensuring integrity of an audit trial within the data filing system.

## Description

### FIELD OF THE INVENTION

An aspect of the invention relates to a method of data filing. The method may be used, for example, for filing data elements that comprise personal data. The method may be used, for example, in data systems in healthcare industries and pharmaceutical industries. Other aspects of the invention relate to a data filing system and a computer program.

### BACKGROUND OF THE INVENTION

A data filing system may comprise personal data. Personal data is understood to be data directly or indirectly relating to a person who has a so-called right to be forgotten. That is, the person has the right that his or her personal data should no longer be accessible and no longer retrievable from the data filing system after a certain date, at least not by a person other than him of herself. One way of respecting the right to be forgotten is to delete the personal data from the data filing system after the date concerned.

Patent publication US 2005/0105719 A1 describes a personal information controlling system that limits use of personal information stored in a storage device. In this system, a privacy policy for each piece of personal information is controlled in connection with a specified available period in which a user of the personal information is allowed to use the personal information. The privacy policy is information specifying the available period. A cipher key is acquired for a cipher that can be deciphered by an administrator of the privacy policy and that cannot be deciphered by the user of the personal information. The cipher key is used to cipher the personal information so that the user cannot use the personal information if the available period specified by the privacy policy has expired.

### SUMMARY OF THE INVENTION

There is a need for a data filing technique that allows respecting the right to be forgotten in a better way.

In order to better address this need, in accordance with an aspect of the invention as defined in claim 1, a method of data filing comprises:
- a data reception step in which a data filing system receives a data element to be included in a data file;
- a key assignment step in which the data filing system randomly assigns an encryption key to the data element so as to avoid that the encryption key is assigned to another data element in the data filing system;
- an expiry date definition step in which the data filing system defines an expiry date for the data element;
- a key storage step in which the data filing system internally stores the encryption key in association with the expiry date that has been defined;
- a data encryption step in which the data filing system encrypts the data element on the basis of the encryption key so as to obtain an encrypted data element;
- a data inclusion step in which the data filing system includes the encrypted data element in the data file; and
- a key deletion step in which the data filing system deletes the encryption key when the expiry date associated with the encryption key is reached.

In accordance with other aspects of the invention, a computer program and a data filing system are provided as defined in claims 13 and 14, respectively.

In each of these aspects, the right to be forgotten can be respected while ensuring data integrity. Data integrity can be ensured because a data element, which may comprise personal data, need not be erased. The data element, which is stored in an encrypted form, is rendered inaccessible by deleting an encryption key that allows obtaining the data element in the clear. The data element may thus remain present in the encrypted form, even after a certain date, an expiry date, which is determined by the right to be forgotten. This can be advantageous in a data filing system that keeps an audit trial with regard to data elements filed in the data filing system.

For the purpose of illustration, some embodiments of the invention are described in detail with reference to accompanying drawings. These embodiments comprise features that are defined in the dependent claims, which are appended to the description. Such a feature may provide a further advantage as will be apparent from the detailed description that follows.

### BRIEF DESCRIPTION OF THE DRAWINGS

FIG. 1 is a block diagram of a data filing system.
FIG. 2 is a table diagram of a data file in the data filing system.
FIG. 3 is a table diagram of an encryption key table in the data filing system.
FIG. 4 is a table diagram of an expiry date table in the data filing system.
FIG. 5 is a table diagram of an audit trail record in the data filing system.
FIG. 6 is a flow chart diagram of a data filing session in a method of data filing, which involves the data filing system.
FIG. 7 is a flow chart diagram of a key management process in the method of data filing.
FIG. 8 is a flow chart diagram of a data read session in the method of data filing.

### DETAILED DESCRIPTION

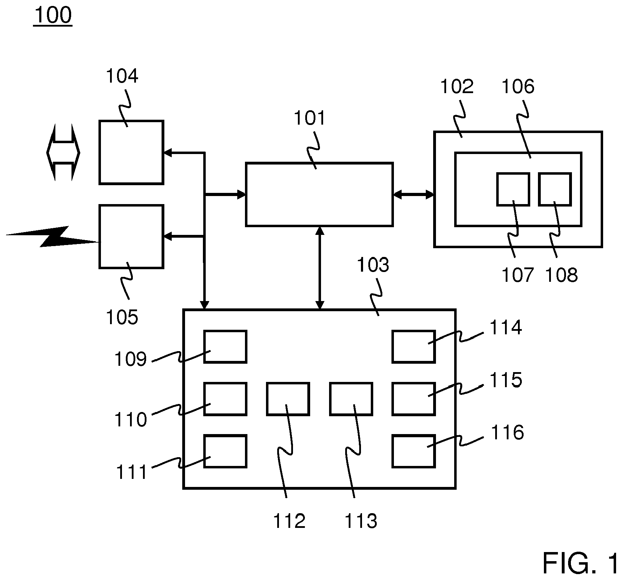

FIG. 1 schematically illustrates a data filing system 100. The data filing system 100 is represented in a block diagram. The data filing system 100 may be in the form of, for example, a server that can be accessed via a network, such as, for example, the Internet or a local area network, or both. The data filing system 100 comprises a processor 101, a program memory 102, a data memory 103, a user interface 104, and a communication interface 105. The program memory 102 may be composed of various data storage devices, such as, for example, one or more memory circuits, or one or more magnetic disks, or a combination of these. The same applies to the data memory 103. The user interface 104 may comprise, for example, a data entry device, which may be in the form of a keyboard, and a data display device. The communication interface 105 may be coupled to the Internet or the local area network, or both.

In more detail, the program memory 102 comprises a data filing software program 106, which includes a key generation module 107, and a key management module 108. The data filing software program 106 comprises a set of instructions that the processor 101 may carry out. This enables the data filing system 100 to carry out operations that will be described in greater detail hereinafter.

The data memory 103 may comprise various data files 109, 110, 111, an encryption key table 112, an expiry delay table 113, and various audit trail records 114, 115, 116. These data entities will be described in greater detail hereinafter. For illustration and simplicity, FIG. 1 illustrates three data files 109, 110, 111, and three audit trail records 114, 115, 116, only. The data memory 103 may comprise more or less of these data entities. The data memory 103 may also comprise at least one further encryption key table and at least one further expiry delay table in addition to the encryption key table 112 and the expiry delay table 113, respectively, illustrated in FIG. 1.

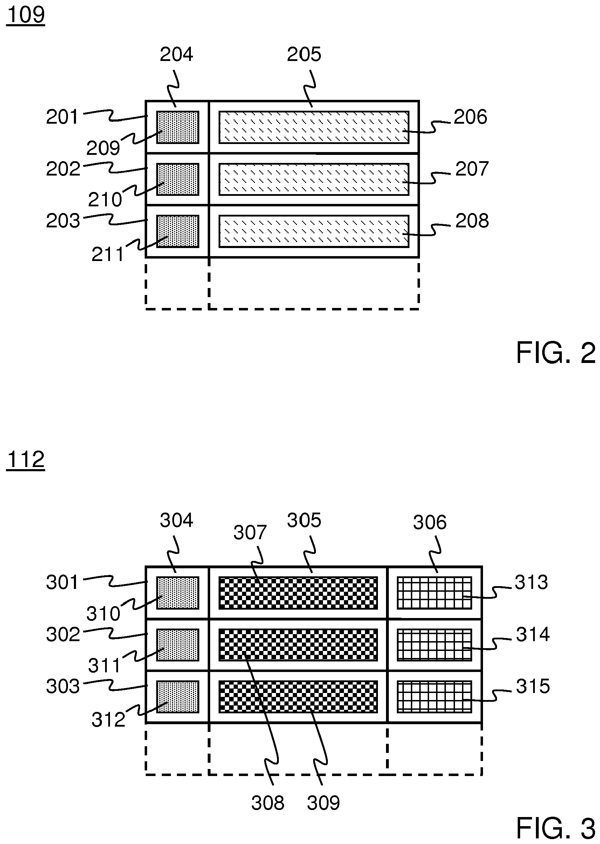

FIG. 2 schematically illustrates a data file 109 in the data filing system 100. The data file 109 is represented in a table diagram, which comprises various lines 201, 202, 203 and various columns 204, 205. The data file 109 comprises various encrypted data elements 206, 207, 208, which are represented in a right-hand column 205. An encrypted data element is an encrypted version of a data element that has been received by the filing system for filing in the data file 109. The encrypted version has been obtained on the basis of an encryption key, which may uniquely be associated with the data element. The data file 109 further comprises various identifiers 209, 210, 211, which are represented in a left-hand column 204. An identifier and a data element that are in a same line of the table diagram may uniquely be associated with each other. Other data files 110, 111 in the data filing system 100 may be similar to the data file 109 illustrated in FIG. 2 and described hereinbefore.

FIG. 3 schematically illustrates the encryption key table 112. The encryption key table 112 is represented in a table diagram, which comprises various lines 301, 302, 303 and various columns 304, 305,306. The encryption key table 112 comprises various encryption keys 307, 308, 309, which are represented in a middle column 305. An encryption key has been used to obtain an encrypted version of a data element that has been received by the data filing system 100 for filing in the data file 109. The encryption key table 112 further comprises various identifiers 310, 311, 312, which are represented in a left-hand column 304. An identifier and an encryption key that are in the same line of the table diagram may uniquely be associated with each other.

An identifier in the encryption key table 112, which is associated with an encryption key in this table, may also occur in a data file 109, 110, 111. In the data file concerned, the identifier is associated with a data element of which an encrypted version is present in the data file. The encrypted version has been obtained on the basis of the encryption key because both are associated with the same identifier. Conversely, an identifier in a data file 109, 110, 111, which is associated with an encrypted version of a data element in this file, may also occur in the encryption key table 112. In the encryption key table 112, the identifier is associated with an encryption key. The encryption key has been used to obtain the encrypted version of the data element because both are associated with the same identifier. An encryption key and a data element can thus be associated with each other if the encryption key and an encrypted version of the data element are associated with a same identifier.

The encryption key table 112 further comprises various expiry dates 313, 314, 315, which are represented in a right-hand column 306. An expiry date and an encryption key that are in the same line of the table diagram may uniquely be associated with each other. The expiry date indicates when the encryption key should be deleted from the data filing system 100.

The data filing system 100 may protect the encryption key table 112 against unauthorized access. For example, data filing system 100 may encrypt the encryption key table 112 itself on the basis of a table encryption key. For greater security, the table encryption key may be repeatedly renewed over time, in a regular or random fashion. The encryption key table 112 may be comprised in a part of the data memory 103 that is physically protected against unauthorized access.

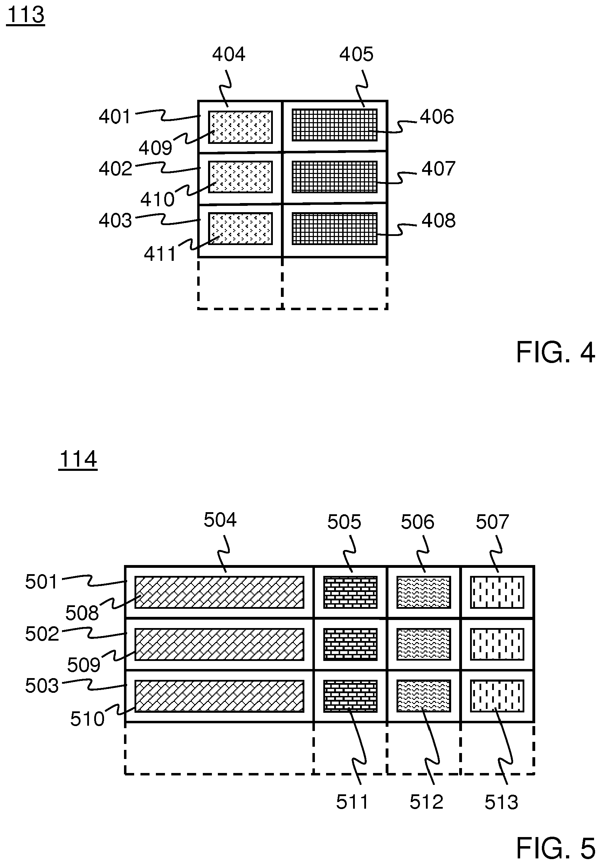

FIG. 4 schematically illustrates the expiry delay table 113. The expiry delay table 113 is represented in a table diagram, which comprises various lines 401, 402, 403 and various columns 404, 405. The expiry delay table 113 comprises various expiry delays 406, 407, 408, which are represented in a right-hand column 405. The data file 109 further comprises various definitions of categories of data elements 409, 410, 411, which are represented in a left-hand column 404. An expiry delay and a definition of a data element category that are in a same line of the table diagram may uniquely be associated with each other. The expiry delay indicates a delay after which a data element belonging to the category concerned should not longer be readable from the data filing system 100.

A data element category may be defined on the basis of, for example a country to which the data element relates. As other example, a data element category may be defined on the basis of a type of information that the data element comprises, such as, for example, a name of a person, an address of that person, a date of birth of that person, or a physician of that person. As yet another example, a data element category may be defined on the basis of an intended use of the data element.

FIG. 5 schematically illustrates an audit trail record 114 in the data filing system 100. The audit trail record 114 is represented in a table diagram, which comprises various lines 501, 502, 503 and various columns 504, 505, 506, 507. The audit trail record 114 may uniquely be associated with a data file, such as, for example, .the data file 109 illustrated in FIG. 2. In this example, the audit trail record 114 comprises various encrypted versions 508, 509, 510 of the data elements that also are present in the data file 109 with which the audit trail record 114 is associated. The encrypted versions 508, 509, 510 of the data elements are represented in a left-hand column 504. The audit trail record 114 may also comprise identifiers similar to those in the data files 109, 110, 112 and the encryption key table 112 described hereinbefore.

The audit trail record 114 may further comprise various filing context indications 511, 512, 513 for a data element. In the table diagram of FIG. 5, a filing context indication is represented in a column and may be associated with a data element of which the encrypted version is in a same line as the filing context indication. For example, a left-middle column 505 may comprise an indication 511 of when the method of filing was applied to the data element. A right-middle column 506 may comprise an indication 512 of how the data element was received. A right-hand column 507 may comprise an indication 513 of who initiated the method of filing. Other audit trail records 115, 116 in the data filing system 100 may be similar to the audit trail record 114 illustrated in FIG. 5 and described hereinbefore.

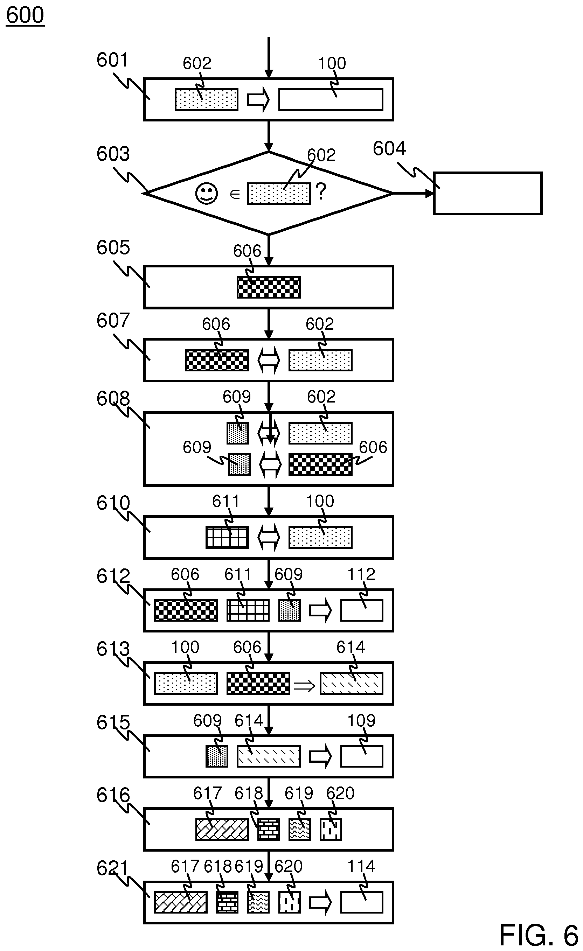

FIGS. 6, 7, and 8 schematically illustrates a method of data filing. The method is illustrated in flow chart diagrams. The method comprises a series of steps that the data filing system 100 carries out when the processor 101 executes the data filing software program 106. The flow chart diagrams may be regarded as a representation of the data filing software program 106 in the program memory 102.

FIG. 6 schematically illustrates a data filing session 600 in the method of data filing. A remote device that is in communication with the data filing system 100 may initiate such a data filing session 600. The remote device may communicate with the data filing system 100 through a network, such as, for example, the Internet. In the data filing session 600, the remote device may operate as a client device. The data filing session 600 may comprise the following steps.

In a data reception step 601, the data filing system 100 receives a data element 602 to be included in a data file, such as, for example, the data file 109 illustrated in FIG. 2. The data filing system 100 may receive the data element 602 from the aforementioned remote device. The data filing system 100 may provide a web page that the remote device can display. The web page may comprise a form with various fields. A user of the remote device may then enter a string of alphanumerical characters in a field. The data filing system 100 may receive the string of alphanumerical characters as the data element 602, or as part of the data element 602. As another example, the data filing system 100 may receive the data element 602 as part of a data stream that is directed to the data filing system 100. The data stream may be in an XML format.

In a data assessment step 603, the data filing system 100 assesses whether the data element 602 that has been received comprises personal data, or not. Personal data is understood to be data directly or indirectly relating to a person who has a right to be forgotten. There are various manners in which the data filing system 100 can assess whether the data element 602 comprises personal data, or not.

For example, let it be assumed that the data filing system 100 provides a webpage comprising a form with various fields as described hereinbefore. In that case, one or more fields may be destined for entering personal data therein, whereas one or more other fields may be destined for entering non-personal data therein. The data element 602 comprises a string of alphanumerical characters that has been entered in a field. The data filing system 100 can then assess whether the data element 602 comprises personal data, or not, on the basis of the field concerned from which the data element 602 originates. As another example, the data filing system 100 can make such an assessment on the basis of descriptive data associated with the data element 602 in, for example, an XML data stream that the data filing system 100 receives.

In case the data element 602 does not comprise personal data, the data filing system 100 may file the data element 602 in the clear. The data filing system 100 may do so in a conventional filing process 604. In case data element 602 does comprise personal data, the data filing carries out further steps that will be described hereinafter.

In a key generation step 605, the data filing system 100 generates an encryption key 606 for the data element 602. To that end, the data filing system 100 may systematically activate the key generation module 107 illustrated in FIG. 1 upon the data reception step 601. The key generation module 107 may comprise, for example, a pseudo random generator that generates a pseudo-random value, which may form the encryption key 606 or at least a portion thereof.

In a key assignment step 607, the data filing system 100 assigns the encryption key 606 that has been generated to the data element 602. In this embodiment, the data filing system 100 has thus randomly assigned the encryption key 606 to the data element 602. Such a random encryption key 606 assignment avoids that the same encryption key 606 has already been assigned to another previously received data element 602 and avoids that the same encryption key 606 will be assigned to another data element 602 yet to be received.

In an identifier association step 608, the data filing system 100 associates an identifier 609 with the data element 602. The data filing system 100 further associates the identifier 609 to the encryption key 606. The identifier 609 may be, for example, a hash that is calculated from the data element 602. The identifier 609 may be uniquely associated with the data element 602 and the encryption key 606. Accordingly, the identifier 609 may uniquely associate the data element 602 with the encryption key 606, and vice versa.

In an expiry date definition step 610, the data filing system 100 defines an expiry date 611 for the data element 602. The expiry date 611 is a date after which the data element 602 should no longer be readable from the data filing system 100. The expiry date 611 may be defined on the basis of a category to which the data element 602 belongs. A category may concern at least one of the following characteristics: a country to which the data element 602 relates, a type of information that the data element 602 comprises, and an intended use of the data element 602. Thus, there may be different expiry dates for different countries, different expiry dates for different types of information, and different expiry dates for different intended uses.

An expiry date definition may involve a table of respective expiry delays for respective categories of data elements, such as, for example the expiry delay table 113 illustrated in FIG. 4. In the expiry date definition step 610, the data filing system 100 may select from this table the expiry delay for the category to which the data element 602 belongs. The data filing system 100 may then define the expiry date 611 on the basis of the expiry delay that has been selected from the table. The expiry date 611 may be a current date to which the expiry delay is added. The data filing system 100 may be provided with the aforementioned table of respective expiry delays in an expiry delay table provision step. This step may be carried out before the date filing session 600 is first carried out.

In a key storage step 612, the data filing system 100 internally stores the encryption key 606 in association with the expiry date 611. More specifically, the data filing system 100 may store the encryption key 606 and the expiry date 611 in the encryption key table 112 illustrated in FIG. 3. To that end, the data filing system 100 may add a line to this table and write the encryption key 606 and the expiry date 611 in this line, in the middle column 305 and the right-hand column 306, respectively. The data filing system 100 further writes the identifier 609 that is associated with the encryption key 606 in the left-hand column 304 and in the same line.

In a data encryption step 613, the data filing system 100 encrypts the data element 602 on the basis of the encryption key 606. Accordingly, an encrypted data element 614 is obtained. To that end, the data filing system 100 may execute an encryption algorithm that is sufficiently robust and provides satisfactory performance. Various different encryption algorithms may satisfy these requirements. The data filing method may thus be relatively indifferent to the encryption algorithm that is loaded in the data filing system 100 and that is executed.

In a data inclusion step 615, the data filing system 100 includes the encrypted data element 613 in the data file concerned. The data file in which the element is to be included may be designated by, for example, the aforementioned user in the data filing session 600. This designation may involve the aforementioned web page, which data filing system 100 provides. More specifically, the data filing system 100 may store the encrypted data element 613 and the identifier 609 associated therewith in the data file 109 illustrated in FIG. 2. To that end, the data filing system 100 may add a line to the data file 109 and write the identifier 609 and the encrypted data element 613 in this line, in the left-hand column 204 and the right-hand column 205, respectively.

In an audit data generation step 616, the data filing system 100 generates audit data 617-620, which relates to the aforementioned steps of filing the data element 602. The audit data 617-620 may comprise an encrypted version 617 of the data element 602 and at least one filing context indication concerning the method of filing applied to the data element 602. The encrypted version 617 of the data element 602 is obtained on the basis of the encryption key 606 that is assigned to the data element 602. The audit data may further comprise, for example, an indication 618 of when the method of filing was applied to the data element 602, an indication 619 of how the data element 602 was received, or an indication 620 of who initiated the method of filing, or any combination of these filing context indications.

The encrypted version 617 of the data element 602 that is included in the audit data 617-620 may correspond with the encrypted data element 613 obtained in the data encryption step 613. As another example, the encrypted version 617 of the data element 602 may be comprised in a portion of the audit data 617-620 that includes the data element 602 and that has been encrypted on the basis of the encryption key 606 that is assigned to the data element 602. That is, the data element 602 may be part of a data package that further includes at least one information element concerning the method of filing applied to the data element 602. The data filing system 100 may then encrypt this data package on the basis of the encryption key 606 that is assigned to the data element 602. The encrypted data package thus obtained may form the audit data 617-620, or at least a portion thereof.

In an audit data recording step 621, the data filing system 100 records the audit data 617-620 in an audit trail record. More specifically, the data filing system 100 may store the audit data 617-620 in the audit trail record 114 illustrated in FIG. 5. To that end, the data filing system 100 may add a line to the audit trail record 114 and write the audit data 617-620 in this line. The encrypted version 617 of the data element 602 is then written in the left-hand column 504. The filing context indications are written in the left-middle column 505, the right-middle column 506, and the right-hand column 507.

The data filing session 600 illustrated in FIG. 6 may end with the audit data recording step 621. Alternately, the data filing session 600 may continue. In that case, the series of steps illustrated in FIG. 6 may be carried out anew for a new data element to be filed.

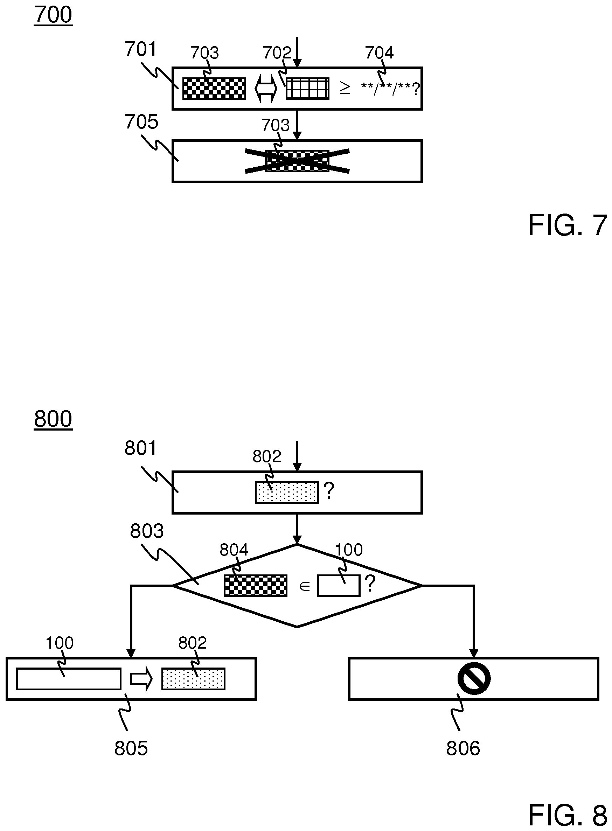

FIG. 7 schematically illustrates a key management process 700 in the method of data filing. The data filing system 100 may regularly carry out the key management process 700. The data filing system 100 may do so by regularly executing the key management module 108 in the program memory 102 illustrated in FIG. 1. The key management process 700 may comprise the following steps.

In an expiry date verification step 701, the data filing system 100 checks respective expiry dates that are associated with respective encryption keys that have been stored. For example, the data filing system 100 may scroll through the right-hand column 306 of the encryption key table 112 illustrated in FIG. 3. In this table, respective expiry dates 313, 314, 315 are stored in association with respective encryption keys 307, 308, 309. While scrolling through the encryption key table 112, the data filing system 100 may compare an expiry date 702, which is associated with an encryption key 703, with a current date 704. If, for example, the expiry date 702 corresponds with the current date 704, or is prior to the current date 704, the data filing system 100 may assess that the expiry date 702 has been reached.

The data filing system 100 carries out a key deletion step 705 for an encryption key 703 that is associated with an expiry date 702 that is reached. In the key deletion step 705, the data filing system 100 deletes the encryption key 703 concerned. For example, let it be assumed that, in the encryption key table 112 illustrated in FIG. 3, a line 303 comprises an encryption key 309 and an identifier 312 and an expiry date 315 associated therewith, whereby the expiry date 315 has been reached. The data filing system 100 may then, for example, delete the encryption key 309 in the line 303 concerned, while keeping the identifier 312 and the expiry date 315 in the line, in the left-hand column 304 and the right-hand column 306 , respectively, of the encryption key table 112. These elements associated with the encryption key 309 may provide useful information even after deletion of the encryption key 309.

The data filing method as described hereinbefore allows filing a data element in such a manner that the data element can be read only up to a certain date, namely an expiry date. The data element can no longer be read after this date, which ensures a right to be forgotten. What is more, this is achieved while ensuring integrity of audit data, even if the audit data comprises contextual information relating to a data element 602 that can no longer be read. The data element, which can no longer be read, can neither be retrieved from the audit data, nor deduced from the audit data. Accordingly, a reliable and comprehensive audit can be carried out notwithstanding the right to be forgotten.

FIG. 8 schematically illustrates data read session 800 in the method of data filing. A remote device that is in communication with the data filing system 100 may initiate the data read session 800. In the data read session 800, the remote device may operate as a client device. The data read session 800 may comprise the following steps.

In a read request step 801, the data filing system 100 receives a request for reading a data element 802 from a data file. The request may originate from, for example, the remote device as mentioned hereinbefore. The data filing system 100 may provide a web page that the remote device can display. The web page may comprise a file navigation tool that allows a user of the remote device to select the data file of interest and to designate the data element 802 of interest. It is assumed that the data element 802 to which the request pertains has been filed in a data filing session 600 as described hereinbefore.

In a key examination step 803, the data filing system 100 examines whether the encryption key 804 that has been assigned to the data element 802 is present in the data filing system 100, or not. For example, let it be assumed that the data element 802 requested to be read is a data element 207 in the data file 109 illustrated in FIG. 1. The data filing system 100 may identify the line 202 in which the data element 207 is present. The data filing system 100 may thus retrieve from the left-hand column 204 the identifier 210 that is associated with the data element 207.

Referring to the encryption key table 112 illustrated in FIG. 3, the data filing system 100 may then identify a line 302 in this table that comprises a same identifier 311 in the left-hand column 304. The data filing system 100 may then examine whether there is an element in the middle column 305 in this line 302 of the encryption key table 112. In case there is an element, this element is the encryption key 308 that has been assigned to data element 207. In case there is no element, or only a dummy element, the data filing system 100 can conclude that the encryption key 308 is no longer present.

In a read step 805, which is carried out if the encryption key 804 is present, the data filing system 100 retrieves the encrypted data element from the data file concerned. The data filing system 100 decrypts the encrypted data element so as to obtain the data element 802 in the clear. The data filing system 100 may then communicate the data element 802 to, for example, the remote device that has initiated the read session.

In an indication provision step 806, which is carried out if the encryption key 804 is not present, the data filing system 100 may provide an indication that the data element 802 is present in the data filing system 100, namely in an encrypted form, but can no longer be read. The data filing system 100 may further indicate the expiry date after which the data element 802 had become inaccessible.

### NOTES

The detailed description hereinbefore with reference to the drawings is provided as an illustration of how the invention may be implemented. The invention may be implemented in numerous different ways. In order to illustrate this, some alternatives are briefly indicated.

The invention may be applied in numerous types of products or methods related to data filing. For example, the invention may be applied in any type of infrastructure that involves data relating to a person who has a right to be forgotten.

The invention may be implemented in numerous manners. For example, there are numerous different ways in which a data filing system may receive a data element to be included in a data file. The detailed description hereinbefore describes an example in which the data filing system receives a data element from a remote device. As another example, the data filing system may receive a data element from a user interface, such as, for example, the user interface illustrated in FIG. 1.

There are numerous different ways of randomly assigning an encryption key to a data element. The detailed description hereinbefore describes an example that involves key generation. As another example, an encryption key may be randomly selected from a pre-established pool of different encryption keys.

There are numerous different ways of defining an expiry date for a data element. The detailed description hereinbefore describes an example that involves an expiry delay table. As another example, the data filing system may define an expiry date for a data element on the basis of data received in association with the data element. This data may have been specified by, for example, a user.

There are numerous different ways of storing an encryption key in association with an expiry date. The detailed description hereinbefore describes an example in which an encryption key and an expiry date are stored in a table. The encryption key and the expiry date are associated with each other if these are in a same line in the table. As other example, an encryption key may be stored in one table and an expiry date associated therewith may be stored in another table. In these respective tables, the encryption key and the expiry date may have a same identifier that associates these with each other.

There are numerous different ways of encrypting a data element on the basis of an encryption key. For example, only a portion of the encryption key may be used for encrypting the data element so as to obtain an encrypted data element that is stored in a data file. Another portion of the encryption key may be used for encrypting the data element so as to obtain an encrypted version of the data element that is included in the audit data.

The term "encryption key" should thus be understood in a broad sense. The term may embrace any form of data, or any set of data, of which at least a portion defines an encryption of a data element.

In general, there are numerous different ways of implementing the invention, whereby different implementations may have different topologies. In any given topology, a single module may carry out several functions, or several modules may jointly carry out a single function. In this respect, the drawings are very diagrammatic. There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows filing of data in accordance with the invention. For example, software may be stored in a suitable device readable medium, such as, for example, a memory circuit, a magnetic disk, or an optical disk. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A method of data filing comprising:
- a data reception step (601) in which a data filing system (100) receives a data element (602) to be included in a data file (109);
- a key assignment step (607) in which the data filing system randomly assigns an encryption key (606) to the data element so as to avoid that the encryption key is assigned to another data element in the data filing system;
- an expiry date definition step (610) in which the data filing system defines an expiry date (611) for the data element;
- a key storage step (612) in which the data filing system internally stores the encryption key in association with the expiry date that has been defined;
- a data encryption step (613) in which the data filing system encrypts the data element on the basis of the encryption key so as to obtain an encrypted data element (614);
- a data inclusion step (615) in which the data filing system includes the encrypted data element in the data file; and
- a key deletion step (705) in which the data filing system deletes the encryption key when the expiry date associated with the encryption key is reached.

2. A method of data filing according to claim 1, comprising:
- an audit data generation step (616) in which the data filing system (100) generates audit data (617-620), the audit data comprising an encrypted version (617) of the data element (602) and at least one filing context indication (618, 619, 620) concerning the method of filing applied to the data element; the encrypted version of the data element being obtained on the basis of the encryption key (606) that is assigned to the data element; and
- an audit data recording step (621) in which the data filing system records the audit data in an audit trail record (114).

3. A method of data filing according to claim 2, wherein the audit data (617_620) comprises at least one of the following filing context indications: an indication (617) of when the method of filing was applied to the data element, an indication (618) of how the data element was received, and an indication (619) of who initiated the method of filing.

4. A method of data filing according to any of claims 1 to 3, wherein, in the expiry date definition step (610), the data filing system (100) defines the expiry date (611) on the basis of a category to which the data element (602) belongs.

5. A method of data filing according to claim 4, comprising:
- an expiry delay table provision step in which the data filing system (100) is provided with a table (113) of respective expiry delays (406, 407, 408) for respective categories of data elements (409, 410, 411), and wherein
- in the expiry date definition step(610), the data filing system selects from the table the expiry delay for the category to which the data element belongs and defines the expiry date (611) on the basis of the expiry delay.

6. A method of data filing according to any of claims 4 and 5, wherein a category (409, 410, 411) comprises at least one of the following: a country to which the data element relates, a type of information that the data element comprises, and an intended use of the data element.

7. A method of data filing according to any of claims 1 to 6, comprising:
- an expiry date verification step (701) in which the data filing system (100) checks respective expiry dates (313, 314, 315) that are associated with respective encryption keys (307, 308, 309) that have been stored, the key deletion step (705) being carried out for an encryption key (703) that is associated with an expiry date (702) that is reached,
and wherein the data filing system regularly carries out the expiry date verification step.

8. A method of data filing according to any of claims 1 to 7, comprising:
- an identifier association step (608) in which the data filing system (100) associates an identifier (609) with the data element (602) and associates the identifier with the encryption key (606).

9. A method of data filing according to claim 8, wherein the identifier (609) is a hash calculated from the data element (602).

10. A method of data filing according to any of claims 1 to 9, comprising:
- a key generation step (605) in which the data filing system (100) generates the encryption key (606) by means of a pseudo random generator upon the data reception step (601).

11. A method of data filing according to any of claims 1 to 10, comprising:
- a data assessment step (603) in which the data filing system (100) assesses whether a received data element (602) comprises personal data, or not, the key assignment step (607), the expiry date assignment step (610), the key storage step (612), the data encryption step (613), the data inclusion step, (615) and the key deletion step (705) being carried out for the data element if the data element comprises personal data, the data element being filed in the clear if the data element does not comprise personal data.

12. A method of data filing according to any of claims 1 to 11, comprising:
- a read request step (801) in which the data filing system (100) receives a request for reading the data element (802) from the data file;
- a key examination step (803) in which the data filing system examines whether the encryption key (804) that has been assigned to the data element is present in the data filing system, or not;
- a read step (805), which is carried out if the encryption key is present, wherein the data filing system retrieves the encrypted data element from the data file and wherein the data filing system decrypts the encrypted data element so as to obtain the data element in the clear; and
- an indication provision step (806), which is carried out if the encryption key is not present, wherein the data filing system provides an indication that the data element is present in the data file but can no longer be read.

13. A computer program (106) comprising a set of instructions that enables a processor (101) within a data filing system (100) to carry out the method according to any of claims 1 to 12.

14. A data filing system (100) adapted to carry out the method according to any of claims 1 to 12.
